# EUROPÄISCHE PATENTSCHRIFT

(11) **EP 1 694 737 B1**
(45) Veröffentlichungstag und Bekanntmachung des Hinweises auf die Patenterteilung: **11.04.2012**
(21) Anmeldenummer: 04803657.8
(22) Anmeldetag: 09.12.2004
(51) Int. Cl.: C08G 18/66, C08J 9/32

(54) **SYNTAKTISCHES POLYURETHAN , ENTHALTEND ÖL, BEVORZUGT RICINUS ÖL**
SYNTACTIC POLYURETHANE CONTAINING OIL, PREFERABLY CASTOR OIL
POLYURETHANNES SYNTACTIQUES CONTENANT DE L'HUILE, DE PREFERENCE DE L'HUILE DE RICIN

(30) Priorität: 11.12.2003 DE 10358371
(43) Veröffentlichungstag der Anmeldung: 30.08.2006
(73) Patentinhaber: BASF SE, 67056 Ludwigshafen (DE)
(72) Erfinder: HUNTEMANN, Peter, 49448 Stemshorn (DE); SCHILLING, Udo, 49356 Diepholz (DE)
(86) Internationale Anmeldenummer: PCT/EP2004/013993
(87) Internationale Veröffentlichungsnummer: WO 2005/056630

(56) Entgegenhaltungen:
- WO-A-94/00504
- WO-A-99/03922
- DE-A1- 19 728 792
- US-A- 5 621 043

## Beschreibung

Die Erfindung betrifft Off-Shore-Rohre, aufgebaut aus (i) einem innerem Rohr, daran haftend angebracht (ii) eine Schicht aus syntaktischen Polyurethanen die erhältlich sind durch Umsetzung von einer Polyisocyanatkomponente a) mit einer Polyolkomponente, wobei die Polyolkomponente b) ein Polyetherpolyolgemisch mit einer mittleren OH-Zahl von 10 bis 280 (Bestandteil b1), in einer Menge von 5 bis 60 Gew.%, bezogen auf das Gesamtgewicht der Polyolkomponente b), und ein Öl auf Basis von Fettsäuren mit 6 bis 25 Kohlenstoffatomen oder Derivate davon (Bestandteil b2) in einer Menge von 10 bis 90 Gew.%, bezogen auf das Gesamtgewicht der Polyolkomponente b), umfasst, in Gegenwart von Mikrohohlkugeln c). Ferner betrifft die Erfindungein Verfahren zur Herstellung der Off Shore Rohre sowieandere im Off-Shore-Bereich eingesetzten Teile und Geräte.

Der Begriff syntaktische Kunststoffe umfasst im allgemeinen Kunststoffe, die Hohlfüllstoffe enthalten. Syntaktische Kunststoffe finden üblicherweise Verwendung als thermische Isolierbeschichtungen, aufgrund ihrer vorteilhaften Druckfestigkeit und Temperaturbeständigkeit bevorzugt im Off-Shore Bereich. Ebenfalls sind Anwendungen als Brandschutzmaterial und als Schallisolationsmaterial bekannt.

WO 87/1070 beschreibt ein Wärmeisolationsmaterial, bestehend aus elastomeren Kunststoff, wie beispielsweise Kautschuk oder Styrolbutadien, als Matrix und Mikrohohlglaskugeln, wobei die Mikrohohlglaskugeln in einer Menge von 40 - 80 Vol.% eingearbeitet werden.

WO 99/3922, WO 02/72701 und EP-A-896 976 beschreiben syntaktische Polyurethane, die aus Polyurethan und Mikrohohlglaskugeln bestehen und bevorzugt als Isolierbeschichtung für Rohre im Off-Shore Bereich eingesetzt werden. Die Herstellung erfolgt durch Zugabe der Mikrohohlkugeln zu einer der Polyurethansystemkomponenten und anschließender Vermischung der Systemkomponenten. WO 99/3922 offenbart die Verwendung von geringen Mengen Ricinusöl in der isocyanatkomponente.

DD 299 120 ein Polyurethansystem, enthaltend eine spezielle Polyolkomponenten mit Polyetherpolyolen mit hohen OH-Zahlen und Ricinusöl, sowie Mikroglaskugeln zur Vermuffung von Kanalisationssteinzeugrohren. Bei den verwendeten Glaskugeln handelt es sich nicht um Hohlkugeln. Das offenbarte Polyurethansystem zeigt verbessertes Tieftemperaturverhalten.

Um gute Dämmeigenschaften eines Schaumsystems zu erhalten, ist es vorteilhaft, möglichst viele Mikrohohlkugeln in das System einzuarbeiten. Problematisch ist, dass dieser hohe Füllstoffgehalt in der Regel durch den Einsatz von niedermolekularen und niederviskosen Polyolsystemen verwirklicht wird, die jedoch zu einem unbefriedigenden Hydrolyseverhalten und zu einer unbefriedigenden Kälteflexibilität führen.

Aufgabe der Erfindung war es, ein Off-Shore-Rohr, aufgebaut aus (i) einem innerem Rohr, daran haftend angebracht (ii) eine Schicht aus syntaktischen Polyurethanen zu liefern, wobei die Rezeptur für die Herstellung von syntaktischen Polyurethanen einerseits eine hohe Beladung von Mikrohohlfüllstoffen ermöglicht und somit zu einer niedrigen Gesamtdichte führt, und andererseits die zur Off-Shore-Dämmung benötigten Eigenschaften, wie gute Hydrolysebeständigkeit und gute Kälteflexibilität ermöglicht.

Die Erfindung konnte gelöst werden, indem ein syntaktisches Polyurethan durch Umsetzung von handelsüblichen Polyisocyanaten mit einer speziellen Polyolrezeptur hergestellt wurde.

Gegenstand der Erfindung ist daher ein Off-Shore-Rohr, aufgebaut aus (i) einem innerem Rohr, daran haftend angebracht (ii) eine Schicht aus syntaktischem Polyurethan, wobei das syntaktische Polyurethan erhältlich durch Umsetzung von
a) einer Polyisocyanatkomponente mit
b) einer Polyolkomponente, wobei die Polyolkomponente b) die Bestandteile
   b1) ein Polyetherpolyolgemisch mit einer mittleren OH-Zahl von 10 bis 280 in einer Menge von 5 bis 60 Gew.-%, bezogen auf das Gesamtgewicht der Polyolkomponente b), und
   b2) ein Öl auf Basis von Fettsäuren mit 10 bis 25 Kohlenstoffatomen oder Derivate davon in einer Menge von 10 bis 90 Gew.% bezogen auf das Gesamtgewicht der Polyolkomponente b),
   umfasst, in Gegenwart von
c) Mikrohohlkugeln.

Unter dem Begriff Mikrohohlkugeln c) sind im Rahmen dieser Erfindung organische und mineralische Hohlkugeln zu verstehen. Als organische Hohlkugeln können beispielsweise Kunststoffhohlkugeln, z.B. aus Polyethylen, Polypropylen, Polyurethan, Polystyrol oder einen Gemisch daraus, eingesetzt werden. Die mineralische Hohlkugeln können beispielsweise Ton, Aluminiumsilikat, Glas oder Gemische daraus enthalten.

Die Hohlkugeln können im Inneren ein Vakuum oder Teilvakuum aufweisen oder mit Luft, Inertgasen, beispielsweise Stickstoff, Helium oder Argon, oder Reaktivgasen, beispielsweise Sauerstoff, gefüllt sein.

Üblicherweise weisen die organischen/polymeren oder mineralischen Hohlkugeln einen Durchmesser von 1 bis 1000 µm, bevorzugt von 5 bis 200 µm auf. Üblicherweises weisen die organischen oder mineralischen Hohlkugeln eine Schüttdichte von 0,1 bis 0,4 g/cm³ auf. Sie besitzen im allgemeinen eine Wärmeleitfähigkeit von 0,03 bis 0,12 W/mK.

Bevorzugt werden als Mikrohohlkugeln Mikroglashohlkugeln verwendet. In einer besonders bevorzugten Ausführungsform weisen die Mikroglashohlkugeln eine hydrostatische Druckfestigkeit von mindestens 20 bar auf. Beispielsweise können als Mikrohohlglaskugeln 3M - Scotchlite^{®} Glass Bubbles verwendet werden.

Die Mikrohohlkugeln werden im allgemeinen in einer Menge von 1 bis 80 Gew.%, bevorzugt von 2 bis weniger als 50 Gew.-%, mehr bevorzugt von 5 bis 35 Gew.-% und besonders bevorzugt von 10 bis 30 Ges.-%, bezogen auf das Gesamtgewicht des resultierenden syntaktischen Polyurethans, zugegeben.

Für die Komponenten a) und b) gilt folgendes:

Die verwendeten Polyisocyanate a) umfassen die üblichen aliphatischen, cycloaliphatischen und insbesondere aromatischen Di- und/oder Polyisocyanate. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat-und insbesondere Urethangruppen.

Die in der Polyolkomponente b) verwendeten Polyetherpolyole werden nach literaturbekannten Verfahren, beispielsweise durch anionische Polymerisation mit Alkalihydroxiden oder Alkalialkoholaten als Katalysatoren oder mit Hilfe von Doppelmetallcyanidkatalysatoren und unter Zusatz mindestens eines Startermoleküls, reaktive Wasserstoffatome gebunden enthält, aus einem oder mehreren Alkylenoxiden mit 2 bis 4 Kohlenstoffatomen im Alkylenrest hergestellt. Geeignete Alkylenoxide sind beispielsweise Tetrahydrofuran, Ethylenoxid und 1,2-Propylenoxid. Die Alkylenoxide können einzeln, alternierend nacheinander oder als Mischungen verwendet werden.

Bevorzugt werden Mischungen aus 1,2-Propylenoxid und Ethylenoxid, wobei insbesondere das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen. In einer weiteren besonders bevorzugten Ausführungsform wird als Alkylenoxid nur 1,2-Propylenoxid verwendet.

Als Startermolekül kommen bevorzugt Alkohole, Amine oder Alkanolamine in Betracht, wobei die Funktionalität der Startermoleküle im allgemeinen zwei bis sechs, bevorzugt 2 bis 3, insbesondere 3 beträgt.

Als difunktionelle Startermoleküle kann beispielsweise Ethandiol, Propandiol-1,2 und - 1,3, Diethylenglykol, Dipropylenglykol, Butandiol-1,4 oder Hexandiol-1,6 oder Gemische davon verwendet werden. Bevorzugt wird Diethylenglykol oder Dipropylenglykol verwendet. Als trifunktionelle Startermoleküle zu Herstellung des Bestandteils b2) werden bevorzugt Glycerin, Trimethylolpropan oder Gemische davon verwendet. Als 4-funktionelles Startermolekül ist Pentaerythrit möglich.

In einer bevorzugten Ausführungsform wird ein di- oder trifunktionelles Startermolekül zur Herstellung der Komponente b1) verwendet, besonders bevorzugt wird ein trifunktionelles Startermolekül eingesetzt. Insbesondere wird Glycerin als Startermolekül verwendet.

Im allgemeinen wird die Alkoxylierung des Bestandteils b1) derart ausgeführt, dass der Bestandteil b1) eine OH-Zahl (OH-Zahl = Funktionalität des Startermoleküls x 56100 1 Molekulargewicht) von 10 bis 280, bevorzugt von 15 bis 150, besonders bevorzugt von 20 bis 90, insbesondere von 25 bis 60 aufweist.

Es ist besonders bevorzugt, dass die oben genannten OH-Zahlen unter Verwendung eines trifunktionellen Startermoleküls erreicht werden.

In der Polyolkomponenten wird als Bestandteil b2) ein Öl auf Basis von Fettsäuren mit 6 bis 25 Kohlenstoffatomen, bevorzugt 10 bis 24 Kohlenstoffatomen, besonders bevorzugt 12 bis 22 Kohlenstoffatomen oder Derivate davon verwendet. Als b2) können die aus dem Stand der Technik bekannten Öle auf Basis von Fettsäuren mit 6 bis 25 Kohlenstoffatomen verwendet werden, sofern sie verträglich mit der PolyurethanSystemkomponenten sind.

Bevorzugt handelt es sich bei dem Öl um Triglyceride von Fettsäuren mit 6 bis 25 Kohlenstoffatomen oder Derivate davon. Besonders bevorzugt enthält das Öl neben den Triglyceriden von Fettsäuren mit 6 bis 25 Kohlenstoffatomen noch freies Glycerin. Im allgemeinen beträgt der freie Glyceringehalt 0,1 bis 20 Gew.%, bevorzugt 5 bis 15 Gew.-%, insbesondere 7 bis 12 Gew.-%, bezogen auf das Gesamtgewicht des Öls.

Beispiele für geeignete Säuren, die sind Capronsäure, Caprylsäure, Caprinsäure, Laurinsäure, Myristinsäure, Palmitinsäure, Stearinsäure, Archidinsäure, Behensäure, Lignocerinsäure, Lauroleinsäure, Myristoleinsäure, Palmitoeinsäure, Ölsäure, Gadoleinsäure, Erucasäure, Ricinolsäure, Linolsäure und Linolensäure. Die Säuren können einzeln oder im Gemisch verwendet werden. Bevorzugt werden Palmitinsäure, Stearinsäure, Ölsäure, Ricinolsäure, Linolsäure und Linolensäure verwendet. Besonders bevorzugt wird Ricinolsäure verwendet.

Bei den einzusetzenden Ölen kann es sich um synthetische oder natürliche Öle handeln. Besonders bevorzugt wird als Bestandteil b2) Ricinusöl verwendet.

Die Öle b2) können als solche oder in Form von Derivaten eingesetzt werden. Unter Derivate werden hierbei die aus dem Stand der Technik bekannten Stoffe verstanden, die durch Modifizierung der Öle erhältlich sind. Beispiele für Modifizierungen sind Umwandlungen an den Doppelbindungen, z.B. durch Hitzepolymerisation, Isomeriesierung, Dehydratation bzw. Addition oder Substitution an den Doppelbindungen, oder Umwandlung des Glycerid-Systems, z.B. durch Umesterung.

Als bevorzugt verwendetes Derivat wird Ricinenöl, welches durch Dehydratation von Ricinusöl erhältlich ist, zum Einsatz als Bestandteil b2) verwendet.

Die Polyolkomponente b) kann in einer bevorzugten Ausführungsform ferner als Bestandteil ein Kettenverlängerungsmittel b3) enthalten. Unter Kettenverlängerungsmittel versteht man im allgemeinen verzweigte oder unverzweigte Alkohole oder Amine, bevorzugt 2-wertige Alkohole, mit einem Molekulargewicht von weniger als 400 g/mol, bevorzugt weniger als 300 g/mol, insbesondere von 60 bis 250 g/mol. Beispiele hierfür sind Ethylenglykol, 1,4-Butandiol, 1,3-Propandiol, Diethylenglykol oder Dipropylenglykol. Bevorzugt verwendet wird Butandiol-1,4. Besonders bevorzugt verwendet wird Dipropylenglykol.

In einer bevorzugten Ausführungsform werden die einzelnen Bestandteile der Polyolkomponente b) so gewählt, dass die Polyolkomponente b) eine Viskosität bei 25°C von 200 mPas bis 1500 mPas, bevorzugt von 300 bis 1300 mPas, besonders bevorzugt von 400 bis 1100 mPas, gemessen nach DIN 53019, aufweist.

Dabei werden die einzelnen Bestandteile der Polyolkomponente b) in folgenden Mengen, jeweils bezogen auf das Gesamtgewicht der Komponente b), eingesetzt:
b1) in einer Menge von 5 bis 60 Gew.-%, bevorzugt von 7 bis 30 Gew.%, besonders bevorzugt von 8 bis 25 Ges.-%, insbesondere von 10 bis 20 Gew,-%,
b2) in einer Menge von 10 bis 90 Gew.-%, bevorzugt von 20 bis 85 Gew.-%, mehr bevorzugt von 40 bis 83, besonders bevorzugt von 50 bis 80 und insbesondere von 55 bis 75 Gew.-%.

Sofern Kettenverlängerungsmittel b3) verwendet werden, so erfolgt dies in einer Menge von 3 bis 25 Gew.-%, bevorzugt von 5 bis 15 Gew.-%, besonders bevorzugt von 7 bis 12 Gew.-%, bezogen auf das Gesamtgewicht der Komponente b).

Gegebenenfalls können der Polyolkomponente noch Zusatzstoffe zugesetzt werden. Hier seien beispielsweise genannt Katalysatoren (Verbindungen, welche die Reaktion der Isocyanatkomponente mit der Polyolkomponente beschleunigen), oberflächenaktive Substanzen, Farbstoffe, Pigmente, Hydrolyseschutzstabilisatoren und/oder Oxidationsschutzmittel sowie UV-Schutzmittel.

Ferner ist es möglich, der Polyolkomponente b) die aus dem Stand der Technik bekannten Treibmittel zuzusetzen. Es ist jedoch bevorzugt, dass die Isocyanatkomponente und die Polyolkomponente kein physikalisches und kein chemisches Treibmittel enthält. Ferner ist bevorzugt, dass diesen Komponenten kein Wasser zugesetzt wird. Somit enthalten die Komponenten a) und b) besonders bevorzugt kein Treibmittel, abgesehen von Restwasser, welches in technisch hergestellten Polyolen enthalten ist

Es ist ferner bevorzugt, dass der Restwassergehalt durch Zusatz von Wasserfängem reduziert wird. Als Wasserfänger sind beispielsweise Zeolithe geeignet. Die Wasserfänger werden beispielsweise in einer Menge von 0,1 bis 10 Gew.-%, bezogen auf das Gesamtgewicht der Polyolkomponente b), eingesetzt.

Neben den erfindungsgemäßen syntaktischen Polyurethanen ist ferner Gegenstand der Erfindung ein Verfahren zur Herstellung von syntaktischen Polyurethanen durch Umsetzung von
a) einer Polyisocyanatkomponente mit
b) einer Polyolkomponente, wobei die Polyolkomponente b) die Bestandteile
   b1) ein Polyetherpolyolgemisch mit einer mittleren OH-Zahl von 10 bis 280 und
   b2) ein Öl auf Basis von Fettsäuren mit 6 bis 25 Kohlenstoffatomen oder Derivate davon umfasst, in Gegenwart von
c) Mikrohohlkugeln.

Für die verwendeten Komponenten a) bis c) wird hier auf vorstehende Ausführungen verwiesen. Ebenso gilt dies für die vorstehend beschriebenen Zusatzstoffe.

Zur Herstellung der Polyurethane werden die Polyisocyanate a) Polyolkomponente b) in solchen Mengen zur Umsetzung gebracht, dass das Äquivalenzverhältnis von NCO-Gruppen der Polyisocyanate a) zur Summe der reaktiven Wasserstoffatome der Komponente b) 1 : 0,5 bis 1 : 3,50 (entsprechend einem Isocyanatindex von 50 bis 350), vorzugsweise 1 : 0,85 bis 1 : 1,30 und besonders bevorzugt von 1 : 0,9 bis 1 : 1,15 beträgt.

Die Ausgangskomponenten werden üblicherweise bei einer Temperatur von 0°C bis 100°C, bevorzugt 15 bis 60°C gemischt und zur Reaktion gebracht. Die Vermischung kann mit den üblichen PUR-Verarbeitungsmaschinen erfolgen. In einer bevorzugten Ausführungsform erfolgt die Vermischung durch Niederdruckmaschinen oder Hochdruckmaschinen.

Die Einarbeitung der Mikrohohlkugeln c) in die PUR-Komponenten erfolgt nach aus dem Stand der Technik bekannten Methoden. Es ist möglich, die Mikrohohlkugeln vor der Umsetzung mindestens einer der Komponenten a) oder b) zuzugeben und/oder die Mikrohohlkugeln unmittelbar nach Umsetzung der Komponenten a) und b) dem noch reagierenden Umsetzungsgemisch zuzugeben. Beispiele für geeignete Vermischungsverfahren sind in WO 94/20286. WO 02/102887 und WO 02/072701 beschrieben. Bevorzugt wird nach der Mischtopfmethode gemäß WO 02/102887 verfahren.

Weiterhin ist Gegenstand der Erfindung die Verwendung der erfindungsgemäßen syntaktischen Polyurethane zur Herstellung von Muffen für Off-Shore-Rohre, sowie zur Herstellung oder Beschichtung anderer Teile und Geräte im Bereich Off-Shore. Beispiele für andere Teile und Geräte im Bereich Off-Shore sind Generatoren, Pumpen und Bojen.

Unter Off-Shore Rohr wird im Rahmen dieser Erfindung ein Rohr verstanden, welches zur Förderung von Öl und Gas dient. Das Öl/ Gas strömt im allgemeinen hierin vom Meeresboden auf Plattformen, in Schiffe/ Tanker oder auch direkt an Land.

Unter Muffen sind die Verbindungen zwischen zwei Rohren oder Rohrteilen zu verstehen.

In einer bevorzugten Ausführungsform weist die Schicht aus erfindungsgemäßen syntaktischen Polyurethan eine Dicke von 5 bis 200 mm, bevorzugt von 10 bis 170 mm, besonders bevorzugt von 15 bis 150 mm auf.

Es ist weiterhin möglich, dass auf der Schicht aus erfindungsgemäßen Polyurethan eine weitere Schicht, z.B. eine Deckschicht aus einem Thermoplasten, angebracht ist. Bevorzugt ist jedoch, dass bei den erfindungsgemäßen Off-Shore-Rohre auf der Schicht (ii) aus syntaktischem Polyurethan keine weitere Schicht mehr angebracht ist.

Schließlich ist Gegenstand der Erfindung ein Verfahren (auch als Rotationsgießverfahren bezeichnet) zur Herstellung von erfindungsgemäßen Off-Shore-Rohren, umfassend die Schritte
1) Bereitstellen eines inneren Rohres, das mit syntaktischen Polyurethan beschichtet werden soll,
2) Rotieren des zu beschichteten Rohres in axialer Richtung,
3) Aufbringen eines nicht ausreagierten Reaktionsgemisches zur Herstellung der Schicht aus syntaktischen Polyurethan, enthaltend die Komponenten a), b) und c), auf das rotierende Rohr.

Im allgemeinen erfolgt in Schritt 3) das Aufbringen des Reaktionsgemisches durch Aufgießen auf das sich drehende Rohr. Bei dem Reaktionsgemisch handelt es sich um ein Polyurethangemisch, das durch Vermischen der Komponenten a), b) und c) mittels herkömmlicher Mischvorrichtungen, z.B. Niederdruckmischkopf, erhalten wurde. Der Vorschub des Mischkopfs wird im allgemeinen so eingestellt, dass bei konstantem Ausstoß die gewünschte Dicke der syntaktischen Polyurethanschicht erreicht wird.

## Patentansprüche

1. Off-Shore-Rohr, aufgebaut aus
(i) einem innerem Rohr, daran haftend angebracht
(ii) eine Schicht aus syntaktischen Polyurethanen
erhältlich durch Umsetzung von
a) einer Polyisocyanatkomponente mit
b) einer Polyolkomponente, wobei die Polyolkomponente b) die Bestandteile
b1) ein Polyetherpolyolgemisch mit einer mittleren OH-Zahl von 10 bis 280 in einer Menge von 5 bis 60 Gew.-% bezogen auf das Gesamtgewicht der Polyolkomponente b) und
b2) ein Öl auf Basis von Fettsäuren mit 6 bis 25 Kohlenstoffatomen oder Derivate davon in einer Menge von 10 bis 90 Gew.-% bezogen auf das Gesamtgewicht der Polyolkomponente b)
umfasst, in Gegenwart von
c) Mikrohohlkugeln.

2. Off-Shore-Rohr nach Anspruch 1, **dadurch gekennzeichnet, dass** die Polyolkomponenten b) zusätzlich den Bestandteil
b3) Kettenverlängerungsmittel
umfasst.

3. Off-Shore-Rohr nach Anspruch 1 oder 2, **dadurch gekennzeichnet, dass** es sich bei der Komponente b2) um Ricinusöl handelt.

4. Off-Shore-Rohr nach einem der Ansprüche 1 bis 3, **dadurch gekennzeichnet, dass** die einzelnen Bestandteile der Polyolkomponente b) so gewählt werden, dass die Polyolkomponente b) eine Viskosität bei 25 °C von 200 mPas bis 1500 mPas, gemessen nach DIN 53419, aufweist.

5. Off-Shore-Rohr nach einem der Ansprüchje 1 bis 4, **dadurch gekennzeichnet, dass** die Schicht (ii) aus syntaktischen Polyurethan eine Dicke von 5 bis 200 mm aufweist.

6. Verfahren zur Herstellung von Off-Shore-Rohren nach einem der Ansprüche 1 bis 5, umfassend die Schritte
1) Bereitstellen eines inneren Rohres, das mit syntaktischen Polyurethan beschichtet werden soll,
2) Rotieren des zu beschichteten Rohres
3) Aufbringen eines nicht ausreagierten Reaktionsgemisches zur Herstellung der Schicht aus syntaktischen Polyurethan, enthaltend die Komponenten a), b) und c), auf das rotierende Rohr.

## Claims

1. An offshore pipe composed of
(i) an inner pipe and, adhesively applied thereto,
(ii) a layer of a syntactic polyurethane obtainable by reacting
a) a polyisocyanate component with
b) a polyol component, the polyol component b) comprising the constituents
b1) a polyetherpolyol mixture having an average OH number of from 10 to 280 in an amount of from 5 to 60% by weight based on the total weight of the polyol component b) and
b2) an oil based on fatty acids of 6 to 25 carbon atoms or derivatives thereof in an amount of from 10 to 90% by weight based on the total weight of the polyol component b),
in the presence of
c) hollow microspheres.

2. The offshore pipe according to claim 1, wherein the polyol component b) additionally comprises the constituent
b3) chain extender.

3. The offshore pipe according to claim 1 or 2, wherein the component b2) is castor oil.

4. The offshore pipe according to any of claims 1 to 3, wherein the individual constituents of the polyol component b) are selected so that the polyol component b) has a viscosity at 25°C of from 200 to 1 500 mPa.s, measured according to DIN 53019.

5. The offshore pipe according to any of claims 1 to 4, wherein the layer (ii) of syntactic polyurethane has a thickness of from 5 to 200 mm.

6. A process for the production of offshore pipes according to any of claims 1 to 5, comprising the steps
1) provision of an inner pipe which is to be coated with syntactic polyurethane,
2) rotation of the pipe to be coated and
3) application of an unreacted reaction mixture for the production of the layer of syntactic polyurethane, comprising the components a), b) and c), to the rotating pipe.

## Revendications

1. Tube extraterritorial, constitué
(i) d'un tube interne, sur lequel est appliquée en adhérant
(ii) une couche à base de polyuréthanes syntactiques pouvant être obtenue par mise en réaction
a) d'un composant polyisocyanate avec
b) un composant polyol, le composant polyol b) comprenant les constituants
b1) un mélange de polyétherpolyols ayant un indice moyen de groupes OH de 10 à 280, en une quantité de 5 à 60 % en poids par rapport au poids total du composant polyol b) et
b2) une huile à base d'acides gras ayant de 6 à 25 atomes de carbone ou de dérivés de tels acides, en une quantité de 10 à 90 % en poids par rapport au poids total du composant polyol b)
en présence de
c) microsphères creuses.

2. Tube extraterritorial selon la revendication 1, **caractérisé en ce que** le composant polyol b) comprend en outre le constituant
b3) prolongateur de chaîne.

3. Tube extraterritorial selon la revendication 1 ou 2, **caractérisé en ce que** le composant b2) consiste en huile de ricin.

4. Tube extraterritorial selon l'une quelconque des revendications 1 à 3, **caractérisé en ce que** les constituants individuels du composant polyol b) sont choisis de manière que le composant polyol b) présente une viscosité à 25 °C de 200 mPa.s à 1 500 mPa.s, mesurée selon DIN 53019.

5. Tube extraterritorial selon l'une quelconque des revendications 1 à 4, **caractérisé en ce que** la couche (ii) à base de polyuréthane syntactique présente une épaisseur de 5 à 200 mm.

6. Procédé pour la fabrication de tubes extraterritoriaux selon l'une quelconque des revendications 1 à 5, comprenant les étapes
1) mise à disposition d'un tube interne, qui est destiné à être revêtu de polyuréthane syntactique,
2) mise en rotation du tube à revêtir,
3) application d'un mélange réactionnel n'ayant pas complètement réagi, pour la production d'une couche à base de polyuréthane syntactique, contenant les composants a), b) et c), sur le tube en rotation.
